# EUROPÄISCHE PATENTANMELDUNG

(11) **EP 4 497 657 A1**
(43) Veröffentlichungstag der Anmeldung: **29.01.2025**
(21) Anmeldenummer: 24183182.5
(22) Anmeldetag: 19.06.2024
(51) Int. Cl.: B62D 5/093, B62D 5/04, B62D 6/00, B62D 5/32, B62D 5/09

(54) **VERFAHREN ZUM BETREIBEN EINER HYDROSTATISCHEN LENKEINRICHTUNG FÜR EIN LANDWIRTSCHAFTLICHES NUTZFAHRZEUG**

(30) Priorität: 26.07.2023 DE 102023119727
(71) Anmelder: Deere & Company, Moline, IL 61265 (US)
(72) Erfinder: Brocke, Stefan, Mannheim (DE); Fritz, Norbert, Mannheim (DE)
(74) Vertreter: Dehnhardt, Florian Christopher

(57) **Zusammenfassung**

Verfahren zum Betreiben einer hydrostatischen Lenkeinrichtung (10) für ein landwirtschaftliches Nutzfahrzeug (12), bei dem ein mittels eines Lenkrads (16) über eine Lenksäule (18) steuerbares Lenkorbitrol (20) vorgesehen ist, mittels dessen sich ein Lenkzylinder (22) nach Maßgabe einer fahrerseitigen Lenkbetätigung auslenken lässt, sowie eine von einer Kontrolleinheit (44) ansteuerbare elektrische Antriebseinheit (48) zur Erzeugung eines an der Lenksäule (18) angreifenden Betätigungsmoments (SWT) vorgesehen ist, wobei der Kontrolleinheit (44) eine an der Lenksäule (18) sensorisch erfasste Lenkbetätigungsgröße, die eine an dem Lenkrad (16) ausgeübte Lenkbetätigung (SWA, SWT) charakterisiert, und eine sensorisch erfasste Lenkstellgröße, die einen mittels des Lenkzylinders (22) an lenkbaren Rädern (42a, 42b) eingestellten Radlenkwinkel (SA) charakterisiert, zugeführt wird, um in Abhängigkeit der zugeführten Größen die elektrische Antriebseinheit (48) in einem Normalbetriebsmodus im Sinne der Erzeugung eines mit dem Radlenkwinkel (SA) kontinuierlich zunehmenden Betätigungsmoments (SWT) an der Lenksäule (18) und in einem Notbetriebsmodus im Sinne der Erzeugung eines eine fahrerseitige Lenkbetätigung unterstützenden Betätigungsmoments (SWT) an der Lenksäule (18) anzusteuern.

## Beschreibung

Die Erfindung betrifft ein Verfahren zum Betreiben einer hydrostatischen Lenkeinrichtung für ein landwirtschaftliches Nutzfahrzeug.

Entsprechend einem typischen Aufbau umfasst eine derartige hydrostatische Lenkeinrichtung ein mittels eines Lenkrads in Drehung versetzbares Lenkdosierventil bzw. -orbitrol, mittels dessen sich ein doppeltwirkender Lenkzylinder nach Maßgabe einer fahrerseitigen Lenkbetätigung auslenken lässt, indem abhängig von der jeweiligen Betätigungsrichtung des Lenkrads und damit des Lenkorbitrols ein erster Orbitrolanschluss einen mit einer Hydraulikversorgung verbundenen Zulauf und ein zweiter Orbitrolanschluss einen mit einem Hydraulikreservoir verbundenen Rücklauf zur hydraulischen Ansteuerung gegenüberliegender Arbeitskammern des Lenkzylinders bildet. Bei der Hydraulikversorgung handelt es sich üblicherweise um eine aus dem Hydraulikreservoir mit Hydraulikflüssigkeit gespeiste Hydraulikpumpe.

Im Ergebnis erlaubt die hydrostatische Lenkeinrichtung eine komfortable Lenkung selbst schwerer Nutzfahrzeuge, wozu der Lenkzylinder beispielsweise mit einer Achsschenkellenkung zur Beeinflussung der Stellung lenkbarer Räder des Nutzfahrzeugs in Verbindung steht. Aufgrund von systembedingten Leckagen führt das zwischen erstem und zweitem Orbitrolanschluss anliegende Druckgefälle jedoch zum Auftreten von Hydraulikverlusten innerhalb des Lenkorbitrols, sodass der durch den Zulauf hindurchtretende Volumenstrom letztlich um einen über den Rücklauf in Richtung des Hydraulikreservoirs abfließenden Leckagestrom verringert ist. Gemessen am Umfang der Lenkbetätigung hat dies eine verminderte Auslenkung des Lenkzylinders und damit des an den lenkbaren Rädern des Nutzfahrzeugs eingestellten Radlenkwinkels zur Folge. Hinzu kommt, dass sich das Druckgefälle zwischen den beiden Orbitrolanschlüssen beim Auslenken in der Regel betraglich von demjenigen beim Einlenken unterscheidet, was dann ebenfalls für die Leckageströme zutrifft. Dies wiederum führt dazu, dass mit Beendigung des Lenkvorgangs, also beim Wiedergeradestellen der lenkbaren Räder, das Lenkrad nicht wieder vollständig seine gewohnte Mitten- bzw. Neutralstellung einnimmt. Über die Zeit gesehen ergibt sich daraus ein Driften der Lenkradstellung gegenüber dem Radlenkwinkel, sodass beide Größen nicht länger in eindeutiger Beziehung zueinander stehen. Dies kann insbesondere dann zu Problemen führen, wenn mittels einer Hilfslenkeinrichtung ein von der Lenkradstellung abhängiges Betätigungsmoment auf das Lenkrad aufgeschaltet werden soll, beispielsweise um eine Selbstzentrierung des Lenkrads in seiner Mitten- bzw. Neutralstellung zur Verbesserung des Geradeauslaufs des Nutzfahrzeugs zu unterstützen.

Des Weiteren können Situationen auftreten, in denen sich die hydrostatische Lenkeinrichtung über das Lenkrad allenfalls noch mit erheblichem Kraftaufwand betätigen lässt. Denkbar ist unter anderem ein Ausfall oder fehlerhafter Betrieb der das Lenkorbitrol mit Hydraulikflüssigkeit speisenden Hydraulikversorgung bzw. Hydraulikpumpe. Das Lenkorbitrol übernimmt in einem solchen Fall die Aufgabe der Hydraulikpumpe, indem durch Drehen des Lenkrads und damit des Lenkorbitrols ein zur Auslenkung des Lenkzylinders führender Hydraulikvolumenstrom erzeugt wird.

Vor diesem Hintergrund ist es Aufgabe der vorliegenden Erfindung, ein Verfahren zum Betreiben einer hydrostatischen Lenkeinrichtung für ein landwirtschaftliches Nutzfahrzeug anzugeben, das zu einem verbesserten Betriebsverhalten der hydrostatischen Lenkeinrichtung führt.

Diese Aufgabe wird durch ein Verfahren zum Betreiben einer hydrostatischen Lenkeinrichtung für ein landwirtschaftliches Nutzfahrzeug mit den Merkmalen des Patentanspruchs 1 gelöst.

Bei dem Verfahren zum Betreiben einer hydrostatischen Lenkeinrichtung für ein landwirtschaftliches Nutzfahrzeug umfasst die hydrostatische Lenkeinrichtung ein mittels eines Lenkrads über eine Lenksäule steuerbares Lenkorbitrol, mittels dessen sich ein Lenkzylinder nach Maßgabe einer fahrerseitigen Lenkbetätigung auslenken lässt, sowie eine von einer Kontrolleinheit ansteuerbare elektrische Antriebseinheit zur Erzeugung eines an der Lenksäule angreifenden Betätigungsmoments, wobei der Kontrolleinheit eine an der Lenksäule sensorisch erfasste Lenkbetätigungsgröße, die eine an dem Lenkrad ausgeübte Lenkbetätigung charakterisiert, und eine sensorisch erfasste Lenkstellgröße, die einen mittels des Lenkzylinders an lenkbaren Rädern des landwirtschaftlichen Nutzfahrzeugs eingestellten Radlenkwinkel charakterisiert, zugeführt wird, um in Abhängigkeit der zugeführten Größen
(i) in einem Normalbetriebsmodus die elektrische Antriebseinheit derart anzusteuern, dass ein mit dem Radlenkwinkel kontinuierlich zunehmendes Betätigungsmoment an der Lenksäule und damit am Lenkrad erzeugt wird, und
(ii) in einem Notbetriebsmodus die elektrische Antriebseinheit derart anzusteuern, dass ein eine fahrerseitige Lenkbetätigung unterstützendes Betätigungsmoment an der Lenksäule und damit am Lenkorbitrol erzeugt wird.

Befindet sich die hydrostatische Lenkeinrichtung im Normalbetriebsmodus, so kann ein der Betätigungsrichtung des Lenkrads entgegengesetztes und mit dem Betrag des Radlenkwinkels zunehmendes Betätigungsmoment erzeugt werden. Das Betätigungsmoment kann im Umkehrpunkt des Radlenkwinkels einen gegen Null gehenden plateauartigen Verlauf aufweisen. Im Ergebnis führt dies dazu, dass eine Selbstzentrierung des Lenkrads in Richtung einer Mitten- bzw. Neutralstellung der lenkbaren Räder des landwirtschaftlichen Nutzfahrzeugs aktiv unterstützt wird. Dies gilt auch für den Fall, dass der Fahrer das Lenkrad loslässt. Da die Erzeugung des Betätigungsmoments nach Maßgabe des Radlenkwinkels erfolgt, also der aktuellen Stellung der lenkbaren Räder, bleibt eine am Lenkrad driftbedingt auftretende Fehlstellung von vornherein ohne Einfluss.

Liegt andererseits der Notbetriebsmodus vor, so kann ein mit der Betätigungsrichtung des Lenkrads übereinstimmendes und vom Betrag des Radlenkwinkels unabhängiges konstantes Betätigungsmoment erzeugt werden, und zwar mit dem Ziel, dass dieses kleiner oder gleich einem maximalen Betätigungsmoment ist. Das maximale Betätigungsmoment wird vorzugsweise so bemessen, dass sich die hydrostatische Lenkeinrichtung über das Lenkrad mit vertretbarem Kraftaufwand betätigen lässt.

Die Ausführung des Notbetriebsmodus ist unter anderem für den Ausfall oder fehlerhaften Betrieb der Hydraulikversorgung der hydrostatischen Lenkeinrichtung vorgesehen. Bei dieser handelt es sich typischerweise um eine aus einem Hydraulikreservoir mit Hydraulikflüssigkeit gespeiste Hydraulikpumpe.

Bei der Lenkbetätigungsgröße handelt es sich beispielweise um einen Lenkradwinkel bzw. ein am Lenkrad angreifendes Betätigungsmoment, das mittels eines der Lenksäule zugeordneten Winkelsensors bzw. Drehmomentsensors sensorisch erfasst wird.

Ferner ist die Lenkstellgröße entweder unmittelbar durch den an den lenkbaren Rädern mittels eines Winkelsensors erfassten Radlenkwinkel oder aber mittelbar durch eine zum Radlenkwinkel in eindeutiger Beziehung stehende Hilfsgröße, so zum Beispiel einer am Lenkzylinder auftretenden Auslenkung, gegeben. Letztere wird mittels eines am Lenkzylinder vorgesehenen Positions- oder Stellwegsensors erfasst.

Die von den jeweiligen Sensoren bereitgestellten Daten werden der Kontrolleinheit beispielsweise über einen mit einem Fahrzeugsteuergerät kommunizierenden CAN-Bus zur Verfügung gestellt bzw. zugeführt.

Vorteilhafte Weiterbildungen des erfindungsgemäßen Verfahrens gehen aus den Unteransprüchen hervor.

Der Normalbetriebsmodus kann um eine weitere Funktion ergänzt werden, indem der Gradient des im Normalbetriebsmodus erzeugten Betätigungsmoments bei Erreichen eines maximalen Radlenkwinkels von der Kontrolleinheit sprunghaft erhöht wird. Dies kann auch für den Fall vorgesehen sein, dass sich durch Auswertung der Lenkbetätigungsgröße bzw. Lenkstellgröße ergibt, dass sich der Lenkradwinkel ändert, ohne dass zugleich als Reaktion eine Veränderung des Radlenkwinkels zu beobachten ist.

In beiden Fällen erfolgt die Erhöhung derart, dass ein künstlicher Endanschlag in Bezug auf eine weitergehende Lenkbetätigung erzeugt wird. Dies trägt dem Umstand Rechnung, dass sich das Lenkorbitrol andernfalls leckagebedingt selbst dann weiterdrehen und damit "überdrehen" ließe, wenn der Lenkzylinder sich in einer seiner beiden Endpositionen befindet und eine darüber hinausgehende Auslenkung bzw. Vergrößerung des Radlenkwinkels aus diesem Grund nicht möglich ist. Entsprechendes gilt für den Fall, dass der Radlenkwinkel durch den mechanisch verfügbaren Stellweg der lenkbaren Räder begrenzt wird.

Des Weiteren kann vorgesehen sein, dass das im Normalbetriebsmodus erzeugte Betätigungsmoment von der Kontrolleinheit in Abhängigkeit fahrdynamischer Parameter modifiziert wird. Zu diesen Größen gehört beispielsweise eine aktuelle Fahrtgeschwindigkeit des landwirtschaftlichen Nutzfahrzeugs, wobei der Betrag des Betätigungsmoments typischerweise mit zunehmender Fahrtgeschwindigkeit erhöht wird. Hierdurch wird die Funktion einer sogenannten Parameterlenkung verwirklicht.

Die Ausführung des Normalbetriebsmodus kann manuell über ein mit der Kontrolleinheit in Verbindung stehendes Bedienterminal auswählbar sein. Denkbar ist in diesem Zusammenhang ebenfalls die Möglichkeit einer fahrerindividuellen Anpassung der Lenkcharakteristik, insbesondere des Verlaufs (insbesondere der Steigung) des dem Lenkrad radlenkwinkelabhängig aufgeprägten Betätigungsmoments. Auch kann ein Feldbetriebsmodus auswählbar sein, in dem die Kontrolleinheit durch entsprechende Ansteuerung der elektrischen Antriebseinheit das Betätigungsmoment an der Lenksäule auf einen vernachlässigbaren Betrag einregelt. Hieraus ergibt sich eine für den Fahrer im Wesentlichen widerstands- bzw. kräftefreie Lenkcharakteristik.

Demgegenüber wird die Ausführung des Notbetriebsmodus von der Kontrolleinheit bevorzugt selbsttätig bei erkanntem Ausfall oder fehlerhaftem Betrieb der Hydraulikversorgung der hydrostatischen Lenkeinrichtung ausgelöst. Ein solcher Zustand kann von einem Selbstdiagnosesystem erkannt und als entsprechende Fehlermeldung an die Kontrolleinheit übermittelt werden.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematisch dargestellte hydrostatische Lenkeinrichtung für ein landwirtschaftliches Nutzfahrzeug,
- Fig. 2a: einen beispielhaften Verlauf eines an einem Lenkrad der hydrostatischen Lenkeinrichtung gemäß Fig. 1 erzeugten Betätigungsmoments in einem Normalbetriebsmodus,
- Fig. 2b: einen Regelkreis zur Erzeugung des in Fig. 2a dargestellten Betätigungsmoments im Normalbetriebsmodus,
- Fig. 3a: einen beispielhaften Verlauf eines an dem Lenkrad der hydrostatischen Lenkeinrichtung gemäß Fig. 1 erzeugten Betätigungsmoments in einem erweiterten Normalbetriebsmodus,
- Fig. 3b: einen Regelkreis zur Erzeugung des in Fig. 3a dargestellten Betätigungsmoments im erweiterten Normalbetriebsmodus,
- Fig. 4a: einen beispielhaften Verlauf eines an dem Lenkrad der hydrostatischen Lenkeinrichtung gemäß Fig. 1 erzeugten Betätigungsmoments in einem Notbetriebsmodus, und
- Fig. 4b: einen Regelkreis zur Erzeugung des in Fig. 4a dargestellten Betätigungsmoments im Notbetriebsmodus.

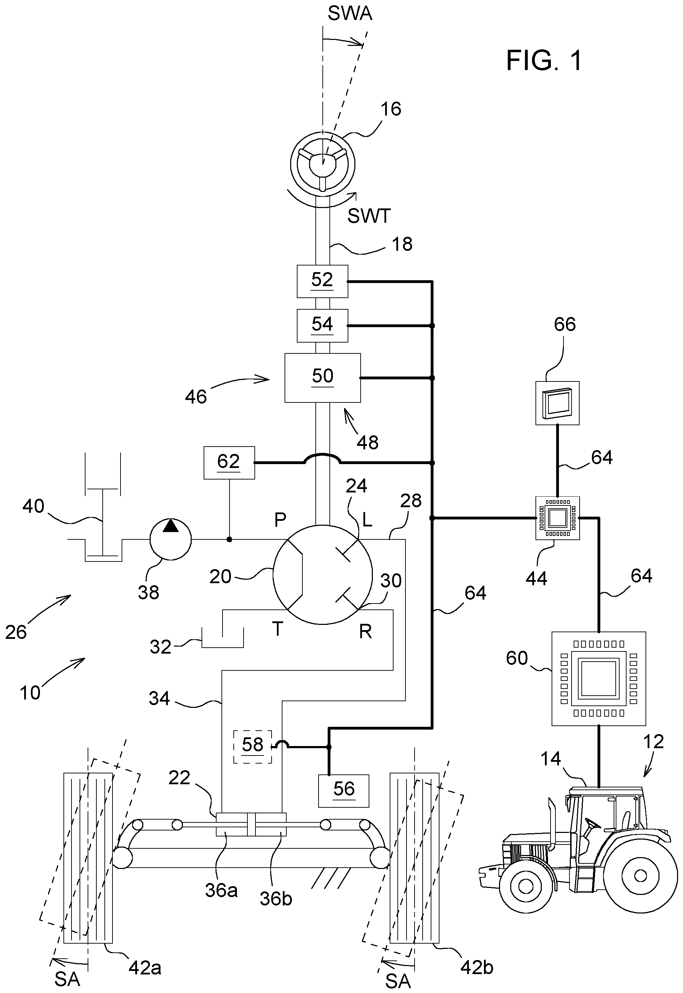

Fig. 1 zeigt eine schematisch dargestellte hydrostatische Lenkeinrichtung 10 für ein landwirtschaftliches Nutzfahrzeug 12, anhand derer die Funktionsweise des erfindungsgemäßen Verfahrens näher erläutert werden soll. Bei dem landwirtschaftlichen Nutzfahrzeug 12 handelt es sich beispielsgemäß um einen landwirtschaftlichen Traktor 14.

Die hydrostatische Lenkeinrichtung 10 umfasst ein mittels eines Lenkrads 16 über eine durchgehende Lenksäule 18 steuerbares Lenkdosierventil bzw. -orbitrol 20, mittels dessen sich ein doppeltwirkender Lenkzylinder 22 nach Maßgabe einer fahrerseitigen Lenkbetätigung auslenken lässt, indem abhängig von der jeweiligen Betätigungsrichtung des Lenkrads 16 und damit des Lenkorbitrols 20 ein erster Orbitrolanschluss 24 einen mit einer Hydraulikversorgung 26 verbundenen Zulauf 28 und ein zweiter Orbitrolanschluss 30 einen mit einem Hydraulikreservoir 32 verbundenen Rücklauf 34 zur hydraulischen Ansteuerung gegenüberliegender Arbeitskammern 36a, 36b des Lenkzylinders 22 bildet. Hierbei handelt es sich bei der Hydraulikversorgung 26 um eine aus dem Hydraulikreservoir 32 mit Hydraulikflüssigkeit gespeiste Hydraulikpumpe 38, die von einem Fahrzeugmotor 420 angetrieben wird.

Beim Wechsel der Betätigungsrichtung des Lenkrads 16 kehrt sich die Funktion der beiden Orbitrolanschlüsse 24, 30 als Zu- bzw. Rücklauf 28, 34 um, wobei der Umfang der Lenkbetätigung bestimmend ist für den Betrag der durch das Lenkorbitrol 20 geförderten Volumenströme. Auf diese Weise lässt sich der Lenkzylinder 22 entsprechend den beiden möglichen Fahrtrichtungen des landwirtschaftlichen Nutzfahrzeugs 12 zur entsprechenden Betätigung lenkbarer Räder 42a, 42b auslenken.

Wie ferner in Fig. 1 zu erkennen ist, ist eine von einer Kontrolleinheit 44 ansteuerbare Hilfslenkeinrichtung 46 in Gestalt einer elektrischen Antriebseinheit 48 vorhanden, mittels derer ein an der Lenksäule 18 angreifendes Betätigungsmoment SWT erzeugbar ist. Letzteres erfolgt, indem mittels der elektrischen Antriebseinheit 48 ein ein fahrerseitiges Lenkmoment überlagerndes Antriebsmoment auf die Lenksäule 18 aufgeschaltet wird. Bei der elektrischen Antriebseinheit 48 handelt es sich vorliegend um einen Lenksäulenmotor 50 mit fester Getriebeübersetzung.

Darüber hinaus erfolgt eine sensorische Erfassung einer Lenkbetätigungsgröße, die eine an dem Lenkrad 16 ausgeübte Lenkbetätigung in Gestalt eines Lenkradwinkels SWA bzw. des an der Lenksäule 18 und damit am Lenkrad 16 angreifenden Betätigungsmoments SWT charakterisiert. Zur sensorischen Erfassung des Lenkradwinkels SWA bzw. des Betätigungsmoments SWT dient ein der Lenksäule 18 zugeordneter erster Winkelsensor 52 bzw. Drehmomentsensor 54.

Daneben ist eine sensorische Erfassung einer Lenkstellgröße vorgesehen, die einen mittels des Lenkzylinders 22 an den lenkbaren Rädern 42a, 42b des landwirtschaftlichen Nutzfahrzeugs 12 eingestellten Radlenkwinkel SA charakterisiert.

Die Lenkstellgröße ist entweder unmittelbar durch den an den lenkbaren Rädern 42a, 42b mittels eines zweiten Winkelsensors 56 erfassten Radlenkwinkel SA oder aber mittelbar durch eine zum Radlenkwinkel SA in eindeutiger Beziehung stehende Hilfsgröße, so zum Beispiel einer am Lenkzylinder 22 auftretenden Auslenkung, gegeben. Letztere wird optional mittels eines am Lenkzylinder 22 vorgesehenen (in Fig. 1 strichliniert dargestellten) Positions- oder Stellwegsensors 58 erfasst.

Die von den jeweiligen Sensoren 52, 54, 56, 58 bereitgestellten Daten werden der Kontrolleinheit 44 über einen mit einem Fahrzeugsteuergerät 60 kommunizierenden CAN-Bus 62 zur Verfügung gestellt bzw. zugeführt. Auf Grundlage der zugeführten Größen werden von der Kontrolleinheit 44 verschiedene Betriebsmodi ausgeführt:

### Normalbetriebsmodus

In einem Normalbetriebsmodus wird die elektrische Antriebseinheit 48 von der Kontrolleinheit 44 derart angesteuert, dass ein mit dem Radlenkwinkel SA kontinuierlich zunehmendes, einer Lenkbetätigung entgegenwirkendes Betätigungsmoment SWT an der Lenksäule 18 und damit am Lenkrad 16 erzeugt wird.

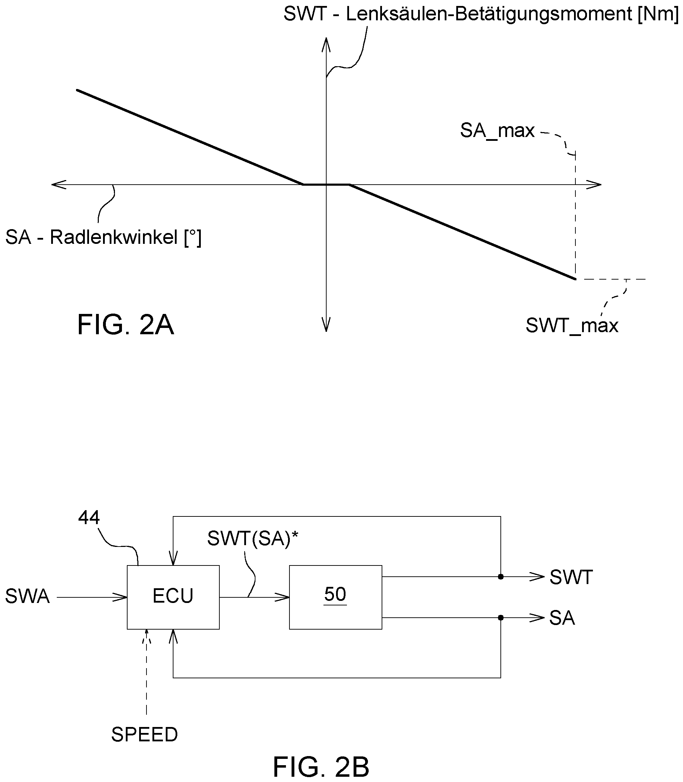

Der Zusammenhang zwischen Betätigungsmoment SWT und Radlenkwinkel SA ist beispielhaft in Fig. 2a veranschaulicht, wobei ein der Betätigungsrichtung des Lenkrads 16 entgegengesetztes und mit dem Betrag des Radlenkwinkels SA kontinuierlich bzw. stetig zunehmendes Betätigungsmoment SWT erzeugt wird (bis hin zu maximalen Werten SA_max bzw. SWT_max). Das Betätigungsmoment SWT weist im Bereich eines Umkehrpunkts des Radlenkwinkels SA (SA - 0°) einen gegen Null gehenden plateauartigen Verlauf auf. Im Ergebnis führt dies dazu, dass eine Selbstzentrierung des Lenkrads 16 in Richtung einer Mitten- bzw. Neutralstellung der lenkbaren Räder 42a, 42b des landwirtschaftlichen Nutzfahrzeugs 12 aktiv unterstützt wird.

In Fig. 2b ist ein mittels der Kontrolleinheit 44 verwirklichter Regelkreis zur Erzeugung des Betätigungsmoments SWT im Normalbetriebsmodus veranschaulicht. Demgemäß wird das mittels des Drehmomentsensors 54 am Lenkrad 16 erfasste Betätigungsmoment SWT entsprechend eines von der Kontrolleinheit 44 berechneten Sollwerts SWT(SA)* eingeregelt. Die Berechnung des Sollwerts SWT(SA)* erfolgt abhängig von der jeweiligen Betätigungsrichtung des Lenkrads 16, die sich aus dem Vorzeichen des mittels des ersten Winkelsensors 52 erfassten Lenkradwinkels SWA ergibt, sowie des mittels des zweiten Winkelsensors 56 unmittelbar bzw. des Positions- oder Stellwegsensors 58 mittelbar erfassten Radlenkwinkels SA.

Optional ist vorgesehen, dass das im Normalbetriebsmodus erzeugte Betätigungsmoment SWT von der Kontrolleinheit 44 in Abhängigkeit fahrdynamischer Parameter modifiziert wird. Zu diesen Größen gehört beispielsgemäß eine über den CAN-Bus 62 abrufbare aktuelle Fahrtgeschwindigkeit SPEED des landwirtschaftlichen Nutzfahrzeugs 12, wobei der Betrag des Betätigungsmoments SWT mit zunehmender Fahrtgeschwindigkeit SPEED erhöht wird. Hierdurch wird die Funktion einer sogenannten Parameterlenkung verwirklicht.

Die Ausführung des Normalbetriebsmodus ist manuell über ein mit der Kontrolleinheit 44 in Verbindung stehendes Bedienterminal 64 auswählbar (siehe Fig. 1). Über das Bedienterminal besteht 64 zusätzlich die Möglichkeit einer fahrerindividuellen Anpassung der Lenkcharakteristik, genauer gesagt des Verlaufs (insbesondere der Steigung) des dem Lenkrad 16 radlenkwinkelabhängig aufgeprägten Betätigungsmoments SWT. Optional ist ein Feldbetriebsmodus auswählbar, in dem die Kontrolleinheit 44 durch entsprechende Ansteuerung der elektrischen Antriebseinheit 48 das Betätigungsmoment SWT an der Lenksäule 18 auf einen vernachlässigbaren Betrag (SWT ~ 0 Nm) einregelt. Hieraus ergibt sich eine für den Fahrer im Wesentlichen widerstands- bzw. kräftefreie Lenkcharakteristik.

### Erweiterter Normalbetriebsmodus

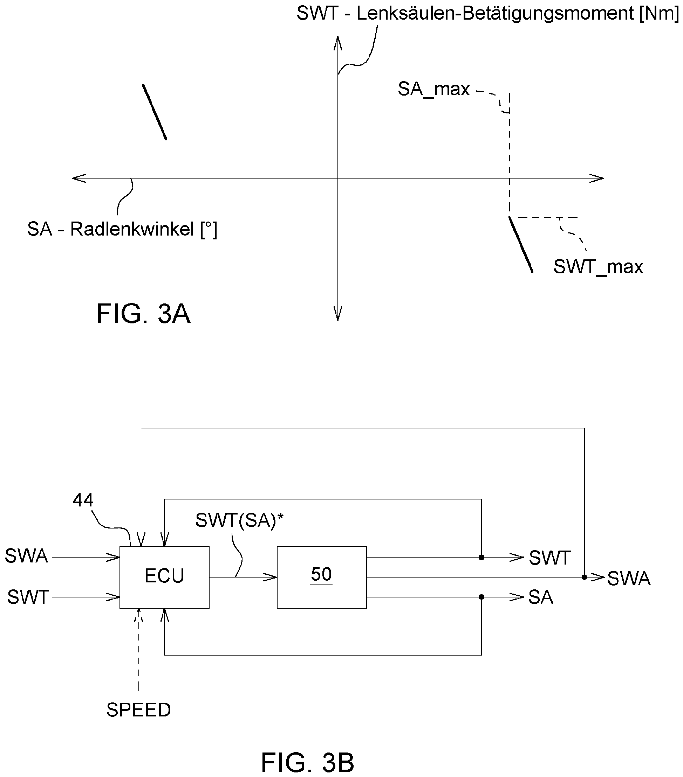

Der Normalbetriebsmodus kann um eine weitere Funktion ergänzt werden, indem der Gradient des im Normalbetriebsmodus erzeugten Betätigungsmoments SWT bei Erreichen eines maximalen Radlenkwinkels SA_max von der Kontrolleinheit 44 entsprechend dem in Fig. 3a dargestellten Verlauf sprunghaft erhöht wird. Dies ist auch für den Fall vorgesehen, dass sich durch Auswertung der Lenkbetätigungsgröße bzw. Lenkstellgröße ergibt, dass sich der Lenkradwinkel SWA ändert, ohne dass zugleich als Reaktion eine Veränderung des Radlenkwinkels SA zu beobachten ist, wenn also ΔSWA > 0, ΔSA = 0 erfüllt ist.

In beiden Fällen erfolgt die Erhöhung derart, dass ein künstlicher Endanschlag in Bezug auf eine weitergehende Lenkbetätigung erzeugt wird. Dies trägt dem Umstand Rechnung, dass sich das Lenkorbitrol 20 andernfalls leckagebedingt selbst dann weiterdrehen und damit "überdrehen" ließe, wenn der Lenkzylinder 22 sich in einer seiner beiden Endpositionen befindet und eine darüber hinausgehende Auslenkung bzw. Vergrößerung des Radlenkwinkels SA aus diesem Grund nicht möglich ist. Entsprechendes gilt für den Fall, dass der Radlenkwinkel SA durch den mechanisch verfügbaren Stellweg der lenkbaren Räder 42a, 42b begrenzt wird.

Der zugehörige Regelkreis ist in Fig. 3b wiedergegeben, wobei dieser gegenüber demjenigen in Fig. 2b eine zusätzliche Überwachung des Radlenkwinkels SA im Hinblick auf das Erreichen des maximalen Radlenkwinkels SA_max wie auch einer Änderung des Lenkradwinkels SWA bzw. des Radlenkwinkels SA vorsieht.

### Notbetriebsmodus

In einem Notbetriebsmodus wird die elektrische Antriebseinheit 48 von der Kontrolleinheit 44 derart angesteuert, dass ein eine fahrerseitige Lenkbetätigung unterstützendes Betätigungsmoment SWT an der Lenksäule 18 und damit am Lenkorbitrol 20 erzeugt wird.

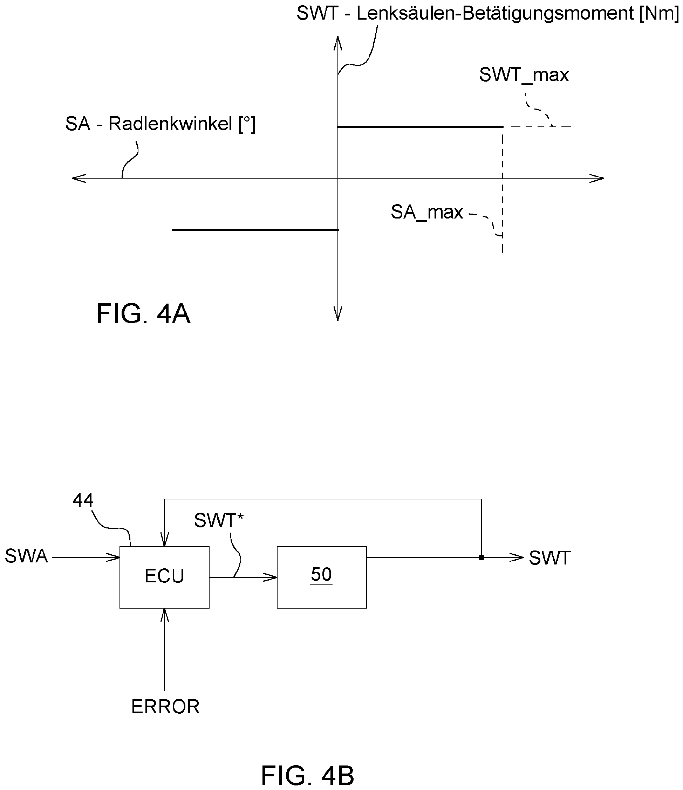

Der Zusammenhang zwischen Betätigungsmoment SWT und Radlenkwinkel SA ist beispielhaft in Fig. 4a veranschaulicht, wobei ein mit der Betätigungsrichtung des Lenkrads 16 übereinstimmendes und vom Betrag des Radlenkwinkels SA unabhängiges konstantes Betätigungsmoment SWT erzeugt wird, und zwar mit dem Ziel, dass dieses kleiner oder gleich einem maximalen Betätigungsmoment SWT_max ist. Das maximale Betätigungsmoment SWT_max wird so bemessen, dass sich die hydrostatische Lenkeinrichtung 10 über das Lenkrad 16 mit vertretbarem Kraftaufwand betätigen lässt.

Die Ausführung des Notbetriebsmodus wird von der Kontrolleinheit 44 selbsttätig bei erkanntem Ausfall oder fehlerhaftem Betrieb der Hydraulikversorgung 26 der hydrostatischen Lenkeinrichtung 10 ausgelöst. Ein solcher Zustand wird von einem Selbstdiagnosesystem des Fahrzeugsteuergeräts 60 unter anderem durch Auswertung der Daten eines einen Förderdruck der Hydraulikpumpe 38 erfassenden Drucksensors 62 erkannt und als entsprechende Fehlermeldung ERROR über den CAN-Bus 64 an die Kontrolleinheit 44 übermittelt (siehe Fig. 4b).

Ausgehend von dem in Fig. 4b wiedergegebenen Regelkreis wird das mittels des Drehmomentsensors 54 am Lenkrad 16 erfasste Betätigungsmoment SWT entsprechend eines von der Kontrolleinheit 44 ermittelten Sollwerts SWT* eingeregelt. Die Ermittlung des Sollwerts SWT* erfolgt auch hier abhängig von der jeweiligen Betätigungsrichtung des Lenkrads 16, die sich ihrerseits aus dem mittels des ersten Winkelsensors 52 erfassten Lenkradwinkel SWA ergibt.

## Patentansprüche

1. Verfahren zum Betreiben einer hydrostatischen Lenkeinrichtung für ein landwirtschaftliches Nutzfahrzeug, bei dem die hydrostatische Lenkeinrichtung (10) ein mittels eines Lenkrads (16) über eine Lenksäule (18) steuerbares Lenkorbitrol (20), mittels dessen sich ein Lenkzylinder (22) nach Maßgabe einer fahrerseitigen Lenkbetätigung auslenken lässt, sowie eine von einer Kontrolleinheit (44) ansteuerbare elektrische Antriebseinheit (48) zur Erzeugung eines an der Lenksäule (18) angreifenden Betätigungsmoments umfasst, wobei der Kontrolleinheit (44) eine an der Lenksäule (18) sensorisch erfasste Lenkbetätigungsgröße, die eine an dem Lenkrad (16) ausgeübte Lenkbetätigung (SWA, SWT) charakterisiert, und eine sensorisch erfasste Lenkstellgröße, die einen mittels des Lenkzylinders (22) an lenkbaren Rädern (42a, 42b) des landwirtschaftlichen Nutzfahrzeugs (12) eingestellten Radlenkwinkel (SA) charakterisiert, zugeführt wird, um in Abhängigkeit der zugeführten Größen
(i) in einem Normalbetriebsmodus die elektrische Antriebseinheit (48) derart anzusteuern, dass ein mit dem Radlenkwinkel (SA) kontinuierlich zunehmendes Betätigungsmoment (SWT) an der Lenksäule (18) und damit am Lenkrad (16) erzeugt wird, und
(ii) in einem Notbetriebsmodus die elektrische Antriebseinheit (48) derart anzusteuern, dass ein eine fahrerseitige Lenkbetätigung unterstützendes Betätigungsmoment (SWT) an der Lenksäule (18) und damit am Lenkorbitrol (20) erzeugt wird.

2. Verfahren nach Anspruch 1, **dadurch gekennzeichnet, dass** der Gradient des im Normalbetriebsmodus erzeugten Betätigungsmoments (SWT) bei Erreichen eines maximalen Radlenkwinkels (SA_max) oder für den Fall, dass sich der Lenkradwinkel (SWA) ohne gleichzeitige Veränderung des Radlenkwinkels (SA) ändert, von der Kontrolleinheit (44) sprunghaft erhöht wird.

3. Verfahren nach Anspruch 1 oder 2, dass das im Normalbetriebsmodus erzeugte Betätigungsmoment (SWT) von der Kontrolleinheit (44) in Abhängigkeit fahrdynamischer Parameter (SPEED) modifiziert wird.

4. Verfahren nach wenigstens einem der vorhergehenden Ansprüche, **dadurch gekennzeichnet, dass** die Ausführung des Normalbetriebsmodus manuell über ein mit der Kontrolleinheit (44) in Verbindung stehendes Bedienterminal (64) auswählbar ist.

5. Verfahren nach Anspruch 4, **dadurch gekennzeichnet, dass** über das Bedienterminal (64) die Lenkcharakteristik, insbesondere der Verlauf des dem Lenkrad (16) radlenkwinkelabhängig aufgeprägten Betätigungsmoments (SWT), anpassbar ist.

6. Verfahren nach wenigstens einem der vorhergehenden Ansprüche, **dadurch gekennzeichnet, dass** die Ausführung des Notbetriebsmodus von der Kontrolleinheit (44) selbsttätig bei erkanntem Ausfall oder fehlerhaftem Betrieb der Hydraulikversorgung (26) der hydrostatischen Lenkeinrichtung (10) ausgelöst wird.
